Europäisches Patentamt

(19) European Patent Office

Office européen des brevets

(11) Publication number: **0 074 737**

A1

## (12) EUROPEAN PATENT APPLICATION

(21) Application number: 82304502.6

(51) Int. Cl.³: **F 16 D 65/56**

(22) Date of filing: 26.08.82

(30) Priority: 05.09.81 GB 8126917

(43) Date of publication of application:
23.03.83 Bulletin 83/12

(84) Designated Contracting States:
DE FR IT SE

(71) Applicant: GENERAL MOTORS FRANCE
56/58 Avenue Louis Roche
F-92231 Gennevilliers Seine(FR)

(72) Inventor: Rocchi, Jean-Claude
25 Place du Marché
F-92700 Colombes(FR)

(72) Inventor: Gregoire, Gabriel
6 Les Grands Clos
F-95270 Asnieres sur Oise(FR)

(72) Inventor: Alvarez, Pedro
60 Rue de Paris
F-95570 Moisselles(FR)

(74) Representative: Haines, Arthur Donald et al,
General Motors Limited Patent Section P.O. Box 242
Delaware Drive
Tongwell Milton Keynes MK15 8HA(GB)

(54) Disc brake assembly.

(57) A disc brake assembly 10 in which a parking brake mechanism is housed within a piston and cylinder hydraulic actuator of the assembly, said parking brake mechanism also serving as a wear adjustment mechanism for the brake pads 12, 14 of the assembly. The parking brake mechanism comprises an actuator member 32 rotationally mounted coaxially with the piston 20 with a cylindrical portion 33 thereof extending within the piston 20, a thruster sleeve 40 slidably mounted upon said cylindrical portion 33, an adjustor sleeve 50 threadedly engaged with said thruster sleeve 40 and having a conical surface 52 thereon spring-biased into contact with a complementary coned surface 54 on the end wall 36 of the cylinder, and a retainer ring 68 within said piston 20. Compensation for wear takes place during hydraulic actuation of the brake assembly by the forward movement of the piston 20 towards a brake disc 30 causing the ring 68 to move the thruster sleeve 40 and adjustor sleeve 50 towards the disc 30. This, in turn, frees conical surface 52 from coned surface 54 and allows adjustor sleeve 50 to turn on the threaded portion 48 of thruster sleeve 40 under the bias of spring 58 to take up brake pad wear.

./...

EP 0 074 737 A1

ADH/310
0074737

DISC BRAKE ASSEMBLY

This invention relates to a disc brake assembly, in particular a disc brake assembly which has hydraulic actuation for service braking, mechanical actuation for parking braking and automatic adjustment to compensate for brake pad wear.

Disc brake assemblies for motor vehicles are known in which a brake pad is urged into contact with a brake disc as a result of the movement of a piston within a cylinder caused by an increase in pressure developed in hydraulic fluid held in said cylinder during service braking, there being means whereby said piston and brake pad may be mechanically urged into contact with said brake disc upon the operation of a parking brake mechanism of the vehicle.

A desirable feature of disc brake assemblies is that means should be provided for the automatic compensation of brake pad wear during the service life of the assemblies, to ensure that the optimum distance of travel of the brake pads relative to the brake disc is maintained throughout said service life.

An example of a disc brake assembly having hydraulic and mechanical actuation of the brakes and having a wear adjustor therefor is disclosed in British Patent Specification 1 297 495. In the assembly disclosed in this British Patent Specification service braking is achieved by hydraulic actuation of a first piston, parking brake actuation is achieved by the mechanical movement of a second piston within the first piston by means of a coarse-pitched threaded actuator, and compensation for wear in the brake pads of the assembly is achieved by means of a one-way clutch mechanism coupling the first piston to the second piston of the brake assembly. The one-way clutch utilized in this brake assembly results in adjustment for wear occurring positively in one direction only, which, in turn, means that it is necessary to rotate the piston or parking brake lever in order to re-set the parking brake arrangement for usage with a new set of unworn brake pads.

According to the present invention there is provided a disc brake assembly having a housing; a cup-shaped piston which is a sliding seal fit in a chamber in the housing, and is actuable by an increase in pressure in hydraulic fluid within said chamber so as to move a brake pad mounted on the closed end of said piston into engagement with a brake disc; an actuator member rotatably mounted in the housing, a thruster sleeve slidably connected to said actuator member and having a threaded portion thereof extending through the chamber within the piston; a spring-loaded adjustor sleeve threadedly engaged with said threaded portion of the thruster sleeve and having a coned surface formed upon one end thereof, the spring-loading tending to move said adjustor sleeve away from the brake disc so that said coned surface engages a complementary coned surface formed within said chamber adjacent a closed end thereof to form a cone clutch between said adjustor sleeve and said closed end of the chamber; and a stop means within said piston which is engageable with an end portion of said thruster sleeve to move both the thruster sleeve and the adjustor sleeve towards the brake disc against said spring-loading, during engagement of the brake pad with the brake disc, when wear in the brake pad exceeds a predetermined thickness of the pad.

Such a disc brake assembly can be readily and economically produced, and there is no need to allow play in the assembly when used in conjunction with a brake caliper to compensate for caliper deflection on the braking since the wear compensation mechanism used in the disc brake assembly of the present invention incorporates this necessary play.

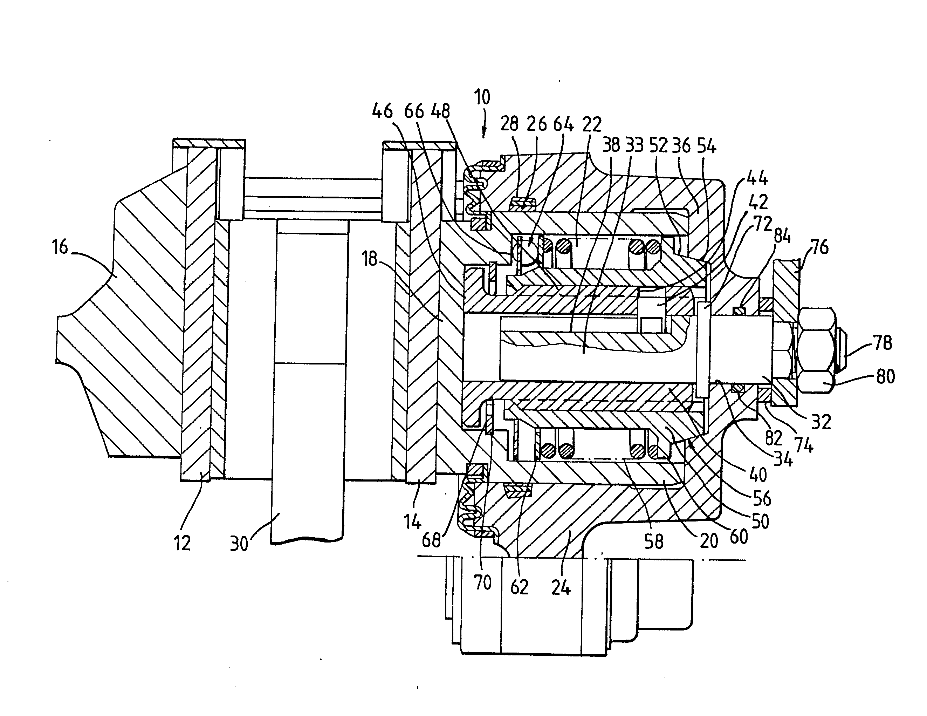

The invention and how it may be performed are hereinafter particularly described with reference to the accompanying drawing which shows a cross-sectional view of a portion of one embodiment of a disc brake assembly according to the present invention.

Referring now to the accompanying drawing, there is shown a portion of a disc brake assembly 10 which includes opposed brake pads 12, 14 one of which is attached to a sliding caliper 16 of the disc brake assembly, the other brake pad 14 being mounted on the closed end 18 of a cup-shaped piston 20 which is a sliding seal-fit in a chamber 22 within a housing 24 of the disc brake assembly. Sealing ring 26 housed in an annular groove 28 in the housing 24 prevents any leakage of hydraulic fluid contained within chamber 22 between piston 20 and the housing 24. The chamber 22 is connected to a master cylinder (not shown) of the motor vehicle and is filled with hydraulic fluid. Pressurisation of the hydraulic fluid in chamber 22 results in movement of piston 20 towards the left, as shown in the drawing, in order to thrust the brake pad 14 associated with the piston 20 into contact with a brake disc 30, and, by reaction, cause the other brake pad 12 attached to the sliding caliper 16 to be pressed into contact with the other side of the brake disc 30, in a manner well known in the art. Movement of the piston 20 towards the left as shown in the drawing distorts the annular seal 26 before sliding movement of the piston 20 through this seal takes place. When the hydraulic pressure in chamber 22 is released, the annular seal 26 returns to its undistorted shape, applying in the process a return force to the piston 20 which is sufficient to cause the piston to move back into the housing a distance sufficient to release the associated brake pad from contact with the brake disc.

A parking brake portion of the disc brake assembly of the invention comprises an actuator member 32 rotatably mounted in a bore 34 within an end wall 36 of the housing 24, said actuator member 32 having at one end a cylindrical portion 33 which extends within the cup-shaped piston 20 and has an axially-extending slot-like channel 38 formed in its cylindrical surface. A thruster sleeve 40 within the cup-shaped piston 20 encircles, and is slidably movable upon, the cylindrical surface of the cylindrical portion 33. Thruster sleeve 40 is prevented from rotational motion with respect to actuator member 32 by reason of a coupling pin 42 located in a cross-bore 44 in the thruster sleeve 40 adjacent one end thereof, said coupling pin 42 extending into the slot-like channel 38. The thruster sleeve 40 terminates at the other end thereof in an annular flange 46 adjacent the closed end 18 of the piston 20, and a major portion of the external surface of thruster sleeve 40 comprises a coarsely-threaded portion 48. An adjustor sleeve 50 is threadedly engaged with said threaded portion 48 of the thruster sleeve 40, and has a coned surface 52 formed upon one end thereof. The adjustor sleeve 50 is spring-loaded away from the brake disc 30 so that the coned surface 52 engages a complementary coned surface 54 formed within the chamber 22 adjacent the end wall 36 of the housing 24 to form a cone clutch 56 between the adjustor sleeve 50 and the housing 24. The spring-loading of the adjustor sleeve 50 is produced by a helical spring 58 which is retained between an annular spring seat flange 60 formed on the adjustor sleeve adjacent the coned surface 52 thereof and an annular spring seat 62 in rolling contact with a ball-bearing assembly 64 which is, in turn, in rolling contact with an internal shoulder 66 on the piston 20. The annular flange 46 of the thruster sleeve 40 is retained adjacent the closed end 18 of the piston 20 by means of an annular split retainer ring 68 which is sprung into position in an annular locking groove 70 formed in an inner wall surface of the piston 20. The distance between the locking groove 70 and the closed end 18 of the piston 20 exceeds the thickness of the annular flange 46 by an amount equivalent to the desired retraction of the piston 20 after release of the hydraulic pressure in chamber 22.

Axial movement of the actuator member 32 within the housing 24 is prevented by a shoulder 72 on the actuator member 32 co-operating with a washer 74 located between the end wall 36 and a parking brake actuator lever 76 which is clamped in place upon the other, threaded end 78 of the actuator member by means of a nut 80. The actuator member 32 is rotationally sealed within the bore 34 of the end wall 36 of the housing 24 by means of an annular seal 82 housed within an annular groove 84 in the bore 34.

OPERATION

During service braking of the brake assembly of the present invention, hydraulic fluid from the master cylinder is fed to the chamber 22 to increase the hydraulic pressure therein and thus drive the cup-shaped piston 20 towards the left as shown in the drawing, so as to apply the brake pads to each side of the brake disc as already described. With new, or relatively unworn, brake pads, the distance travelled by the piston 20 in order to apply the brake pads 12, 14 to the brake disc 30 is less than the predetermined clearance provided between the locking groove 70 and the annular flange 46 of thruster sleeve 40. Consequently the closed end 18 of piston 20 moves away from the annular flange 46 and retainer ring 68 approaches annular flange 46. Similarly, when the hydraulic pressure in chamber 22 is released, the return motion of the piston 22 under the restoring force exerted by the annular seal 26 causes the retainer ring 68 to move to the right as shown in the drawing relative to the thruster sleeve 40.

As the brake pads 12, 14 wear after repeated applications of the brake, the distance of travel required by the piston 20 in order to apply the brake pads 12, 14 to the brake disc 30 gradually increases until the predetermined clearance between the locking groove 70 and the annular flange 46 of thruster sleeve 40 is eliminated. Once this occurs, further movement of the piston 20 towards the brake disc 30 is accompanied by corresponding movement of the thruster sleeve 40, due to contact being made between the retainer ring 68 and the annular flange 46. Movement of the thruster sleeve 40 to the left as shown in the drawing relative to actuator member 32 can occur by reason of the coupling pin 42 sliding along the slot-like channel 38 in actuator member 32. Due to the threaded engagement of thruster sleeve 40 and adjustor sleeve 50, adjustor sleeve 50 initially also moves to the left as shown in the drawing, compressing spring 58 and disengaging cone clutch 56. As soon as the coned surface 52 of the adjustor sleeve 50 is freed from the complementary coned surface 54 on the housing 24, the spring-loading on the adjustor sleeve by the helical spring 58 causes the adjustor sleeve 50 to rotate upon the thruster sleeve 40 until the cone clutch 56 is re-engaged. This movement of the adjustor sleeve 50 effectively readjusts the return position of the piston 20, thus effectively adjusting the disc brake assembly to compensate for the wear occurring in the brake pads.

When it is necessary to apply the parking brake mechanism, the parking brake lever 76 is rotated in order to turn the actuator member 32 within the housing 24. Since thruster sleeve 40 is coupled to actuator member 32 by the coupling pin 42, thruster sleeve 40 also commences to turn. Adjustor sleeve 50, meanwhile, is retained stationary, due to cone clutch 56 being engaged.  Consequently, the turning movement of thruster sleeve 40 relative to adjustor sleeve 50 results in the threaded engagement of the two sleeves causing the thruster sleeve 40 to move to the left as shown in the drawing.  Further rotation of the parking brake lever 76 then results in movement of the thruster sleeve 40 along the cylindrical portion 33 of the actuator member 32 as a result of the engagement of the cone clutch 56 preventing rotation of the adjustor sleeve 50 relative to the housing 24.  The piston 20 itself cannot rotate within the housing 24 due to the presence of the brake pad 14 secured to the closed end 18 of the piston 20.  Thus the movement of the thruster sleeve 40 axially along the cylindrical portion 33 of the actuator member 32 results in the thruster sleeve 40 moving the piston 20 towards the left as seen in the drawing so as to apply the brake pads 12, 14 to the brake disc 30.

To release the applied parking brake mechanism, the parking brake lever 76 is released and rotated in the reverse direction from the direction required to apply the parking brake mechanism.  This movement rotates the actuator member 32 in the opposite direction, thus reversing the direction of movement in the thruster sleeve 40, and allows the piston 20 to be retracted back into the housing as a result of the restoring force exerted thereon by means of the annular ring 26.  Once the parking brake lever 76 has been released, the disc brake assembly in the released position is restored to a position of balance in which the cone clutch 56 is engaged and the predetermined clearance between the locking groove 70 and the annular flange 46 is restored.

If desired, the coupling pin 42 and slot-like channel 38 could be replaced by a splined sliding connection to increase the mechanical strength of the

0074737

sliding connection.  Moreover, if desired, a low friction surface, such as a roller thrust bearing, can be incorporated in the annular flange 46 of thruster sleeve 40 to contact the closed end 18 of the piston 20, so as to reduce twisting loads exerted on the closed end 18 of the piston 20 during application of the parking brake mechanism of the disc brake assembly of the invention.

The disc brake assembly of the present invention provides a neat, compact and effective arrangement of a parking brake mechanism within a piston and cylinder hydraulic mechanism for service brake use.

## Claims:

1. A disc brake assembly (10) comprising a housing (24); a cup-shaped piston (20) which is a sliding seal fit in a chamber (22) in the housing and is actuable by an increase in pressure in hydraulic fluid within said chamber (22) so as to move a brake pad (14) mounted on the closed end (18) of said piston (20) into engagement with a brake disc (30); and means (32, 40, 76) for mechanically urging said piston (20) and said brake pad (14) into contact with said brake disc (30); characterised in that the assembly (10) includes an actuator member (32) rotatably mounted in the housing (24); a thruster sleeve (40) slidably connected to said actuator member (32) and having a threaded portion (48) thereof extending through said chamber (22) within the piston (20); a spring-loaded adjustor sleeve (50) threadedly engaged with said threaded portion (48) of the thruster sleeve (40) and having a coned surface (52) formed upon one end thereof, the spring-loading (58) tending to move said adjustor sleeve (50) away from the brake disc (30) so that said coned surface (52) engages a complementary coned surface (54) formed within said chamber (22) adjacent a closed end (36) thereof to form a cone clutch (56) between said adjustor sleeve (50) and said closed end (36) of the chamber; and a stop means (68) within said piston (20) which is engageable with an end portion (46) of said thruster sleeve (40) to move both the thruster sleeve (40) and the adjustor sleeve (50) towards the brake disc (30) against said spring-loading (58), during engagement of the brake pad (14) with the brake disc (30), when wear in the brake pad (14) exceeds a predetermined thickness of the pad.

2. A disc brake assembly according to claim 1, characterised in that the thruster sleeve (40) is slidably connected to the actuator member (32) by means of a pin and slot coupling mechanism (38, 42).

3.    A disc brake assembly according to claim 1 or 2, characterised in that the adjustor sleeve (50) is spring-loaded by means of a helical spring (58) encircling said adjustor sleeve (50), which spring is compressed between spring seats (60, 66) on the adjustor sleeve (50) and on the piston (20).

4.    A disc brake assembly according to any one of the preceding claims, characterised in that the stop means is an annular split retainer ring (68) sprung into place in an annular groove (70) in said piston (20), and said end portion (46) of the thruster sleeve (40) has an annular flange formed thereon.

5.    A disc brake assembly according to any one of the preceding claims, characterised in that said end portion (46) of the thruster sleeve (40) is provided with a low friction surface to contact the closed end (18) of said pistion (20).

0074737

Application number

EP 82 30 4502

# European Patent Office

# EUROPEAN SEARCH REPORT

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| | --- | | F 16 D 65/56 |
| A | US-A-3 781 068 (BROOKS) *Column 2, lines 5 to 20; figure 2* | 1 | |
| | --- | | |
| A | US-A-3 688 875 (DE HOF) | | |
| | --- | | |
| A | GB-A-1 061 547 (KELSEY HAYES) | | |
| | --- | | |
| A | US-A-3 770 082 (BROOKS) | | |
| | --- | | |
| A | US-A-3 805 924 (GAMBARDELLA) | | |
| | --- | | |
| A,D | GB-A-1 297 495 (GEN. MOTORS) | | |
| | ----- | | |

**TECHNICAL FIELDS SEARCHED (Int. Cl. ³)**

F 16 D 65/56
F 16 D 65/16
F 16 D 65/52
F 16 D 65/66

The present search report has been drawn up for all claims

| Place of search THE HAGUE | Date of completion of the search 13-12-1982 | Examiner HARTEVELD C.D.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82